# EUROPÄISCHE PATENTANMELDUNG

(11) **EP 1 566 481 A1**
(43) Veröffentlichungstag der Anmeldung: **24.08.2005**
(21) Anmeldenummer: 05100578.3
(22) Anmeldetag: 28.01.2005
(51) Int. Cl.: D21F 7/00, F16F 15/00

(54) **Schaberdämpfung**

(30) Priorität: 13.02.2004 DE 102004007444
(71) Anmelder: Voith Paper Patent GmbH, 89522 Heidenheim (DE)
(72) Erfinder: Gobec, Georg Dr., 2700 Wiener Neustadt (AT); Gamsjäger, Norbert Dr., 2721 Bad Fischau (AT); Höllwarth, Peter, 4550 Kremsmünster (AT)

(57) **Zusammenfassung**

Querelement (1,28) für eine bahnverarbeitende Maschine, mit einem balken- oder walzenförmigen Grundkörper (2,19,32,33) der zumindest abschnittweise, sich im wesentlichen quer zur Maschinenrichtung erstreckend, mittelbar oder unmittelbar mit der äußeren oder inneren Mantelfläche einer Walze in Kontakt bringbar ist, wobei der Grundkörper (2,19,32,33) einen Sensor (11,20) zur Ermittlung von Betriebszuständen des Grundkörpers (2,19,32,33) und einen Akuator (12,21) zur Änderung von Eigenschaften des Grundkörpers (2,19,32,33) umfasst.

## Beschreibung

Die vorliegende Erfinddung betrifft ein Querelement für eine bahnverarbeitende Maschine, insbesondere eine Maschine zur Herstellung von Papier, Karton oder Tissue, nach dem Oberbegriff des Patentanspruchs 1.

Querelemente finden in bahnverarbeitenden Maschinen, insbesondere in Maschinen zur Herstellung von Papier, Karton oder Tissue als Schaberbalken, Schaberklingenhalter oder als Schaberklinge einer Schabereinrichtung, als Rakelbalken oder Rakelwalze einer Rakeleinrichtung, als Querbalken einesLuftabquetschelements oder als Dichtleiste für Saugwalzen Verwendung.

Querelemente weisen einen balken- oder walzenförmigen Grundkörper auf. Die elementaren Eigenschaften, wie bspw. Schwingungsverhalten oder Steifigkeit und dgl., der aus dem Stand der Technik bekannten Querelemente werden in der Regel bei der Konstruktion des Grundkörpers festgelegt. Eine Anpassung des Schwingungsverhaltens und der Steifigkeit des Querelements an die jeweiligen Prozeßbedingungen ist somit bei den aus dem Stand der Technik bekannten Querelementen nicht möglich.

Des weiteren sind die bekannten Querelemente in der Regel jeweils nur für einen Anwendungs- und Belastungsfall ausgelegt, d.h. dass bspw. eine Anpassung an neue geometrische und / oder mechanische Verhältnisse im Allgemeinen nur durch Umbau möglich ist.

Des weiteren besitzen Querelemente verstellbare Eigenschaften, wie bspw. Position und Winkelstellung des Querelement s relativ zur Walze, welche abhängig von den Prozeßbedingungen und Maschinenparametern in einem gewissen Bereich veränderbar sind. Bei den aus dem Stand der Technik bekannten Querelementen sind hierzu in der Regel zwischen der Vorrichtung die das Querelement haltert und dem Querelement selbst mechanische, elektrische oder pneumatische Verstelleinrichtungen vorgesehen.

Bei den aus dem Stand der Technik bekannten Schabereinrichtung en ist bspw. der Anstellwinkel der Schaberklinge zur Anpassung auf geänderte Walzendurchmesser und / oder Prozeßbedingungen durch pneumatische oder mechanische Verstelleinrichtungen einstellbar.

Aus der DE 195 08 298 A1 ist bekannt, zwischen Schaberklinge und Schaberklingenhalter ein Dämpfungsglied vorzusehen um das Schwingungsverhalten der Schaberklinge auf einen bestimmten Frequenzbereich anzupassen.

Die WO 02/22950 beschreibt ein System zur Kompensation der Durchbiegung eines Querelements bei dem zwischen dem Rahmen und einer Unterstützungsröhre des Querelements Kompensationselemente angeordnet sind. Die Kompensationselemente werden abhängig von der Durchbiegung des Querelements unterschiedlich stark mit Druck beaufschlagt, so dass im Resultat die Durchbiegung des Querelements ausgeglichen wird.

Des weiteren ist bekannt, Sensoren zur Messung des Drucks an Walzenoberflächen und / oder zur Messung der Durchbiegung von Walzen oder Balken zu verwenden.

Die US 5,699,729 beschreibt ein Walzensystem, bei dem im Bereich der Manteloberfläche der Walze ein Drucksensor vorgesehen ist, welcher sich als Helix von einem längsseitigen Ende zum anderen längsseitigen Ende der Walze erstreckt.

Ausgehend von den aus dem Stand der Technik bekannten Querelementen ist es die Aufgabe der vorliegenden Erfindung ein verbessertes Querelement vorzuschlagen.

Die Aufgabe wird erfindungsgemäß durch ein Querelement mit den Merkmalen des Patentanspruchs 1 gelöst.

Bevorzugte Ausführungsformen und vorteilhafte Weiterbildungen sind in den Unteransprüchen angegeben.

Das Querelement gemäß der Gattung weist einen balken- oder walzenförmigen Grundkörper auf, der sich zumindest abschnittweise quer zur Längsrichtung der bahnverarbeitenden Maschine erstreckt und mittelbar oder unmittelbar mit der äußeren oder inneren Mantelfläche einer Walze der bahnverarbeitenden Maschine in Kontakt bringbar ist.

Beim erfindungsgemäßen Querelement ist darüberhinaus vorgesehen, dass ein Sensor und ein Akuator integraler Bestandteil des Grundkörpers sind, wobei durch den Sensor Betriebszustände des Grundkörpers ermittelbar sind, und wobei durch den Aktuator Eigenschaften des Grundkörpers einstellbar sind.

Erfindungsgemäß sind demzufolge keine separaten außerhalb des Grundkörpers angeordneten Sensoren und Aktuatoren vorgesehen. Vielmehr ist der Sensor und der Aktuator intergraler Bestandteil des Grundkörpers des Querelements.

Da der Aktuator integraler Bestandteil des Grundkörpers ist, kann dieser bspw. auf die Durchbiegung, die Steifigkeit, das Dämpfungsverhalten usw. des Grundkörpers Einfluss nehmen. Somit wird ein Querelement geschaffen, dessen elementare Eigenschaften unmittelbar beeinflussbar sind.

Des weiteren kann durch die Wirkung der Aktuatoren Einfluß auf die Form und Gestalt des Grundkörpers genommen werden, so dass dadurch bspw. auch die Winkelstellung und Position des Grundkörpers relativ zur Walze beeinflussbar sind. Somit wird ein Querelement geschaffen, dessen einstellbare Eigenschaften unmittelbar über Eigenschaftsänderungen des Grundkörpers einstellbar sind.

Da die Sensoren integraler Bestandteil des Grundkörpers sind, können direkt am "Ort des Geschehens" Betriebszustände des Grundkörpers detektiert werden. Als zu detektierende Betriebszustände des Grundkörpers sind bspw. Schwingungsfrequenzen, Schwingungsamplituden, Durchbiegung, Temperatur, Druck usw. denkbar. Da beim erfindungsgemäßen Querelement der Sensor und der Aktuator in der Regel über eine Regelungselektronik miteinander verbunden sind, können demzufolge auf Basis der detektierten Betriebszustände des Grundkörpers adaptiv durch Aktuatorwirkung Eigenschaftsänderungen des Grundkörpers bzw. des Querelements vorgenommen werden.

Es sind unterschiedliche Möglichkeiten denkbar, den Sensor und den Aktuator als integralen Bestandeteil des Grundkörpers auszubilden. Nach einer besonders bevorzugten Ausführungsform ist vorgesehen, dass der Grundkörper im wesentlichen aus einem ersten Werkstoff, einem zweiten Werkstoff und einem dritten Werkstoff aufgebaut ist, wobei die drei Werkstoffe miteinander einen Verbund bilden, und wobei die Grundstruktur des Grundkörpers durch den ersten Werkstoff, der Sensor durch den zweiten Werkstoff und der Aktuator durch den dritten Werkstoff gebildet wird.

Der Grundkörper bildet somit einen Verbund aus einer Grundstruktur, dem Sensor und dem Aktuator. Hierdurch werden einerseits besonders effektiv bspw. Kraftwirkungen des Aktuators auf die Grundstruktur übertragen und somit Eigenschaftsänderungen des Grundkörpers bewirkt. Andererseits werden hierdurch besonders effektiv bspw. Kraftwirkungen, die auf die Grundstruktur einwirken, auf den Sensor übertragen und somit Betriebszustände des Grundkörpers detektiert.

Ein weiterer Vorteil des beschriebenen Ausführungsbeispiels besteht darin, dass ein als Verbund hergestellter Grundkörper besonders einfach und somit kostengünstig herstellbar ist. Des weiteren wird ein besonders einfach und robust aufgebauter Grundkörper geschaffen.

Ein weiterer Vorteil dieser Ausführungsform besteht darin, dass der zweite und der dritte Werkstoff, d.h. der Sensor und der Akruator relativ zu der aus dem ersten Werkstoff gebildeten Grundstruktur nahezu beliebig anordenbar sind. dies bedeutet, dass der Sensor und der Aktuator im Grundkörper beliebig angeordnet werden können. dies bedeutet, dass der Sensor und der Aktuator im Grundkörper beliebig angeordnet werden können.

Gemäß weiteren Ausführungsformen der Erfindung ist vorgesehen, dass der erste Werkstoff ein Faserverbundwerkstoff (faserverstärktes Matrixmaterial) ist, oder dass der erste Werkstoff ein Hybridverbundwerkstoff aus Faserverbund und Metall ist, oder dass der erste Werkstoff ein metallischer Werkstoff oder ein thermoplastischer Kunststoff ist.

Es sind unterschiedliche Möglichkeiten denkbar , welche Komponenten der zweite Werkstoff umfasst.

Nach einem bevorzugten Ausführungsbeispiel weist der zweite Werkstoff eine piezoelektrisch und / oder eine optoelektrisch aktive Komponente auf.

Unter einer piezoelektrisch aktiven Komponente soll in diesem Zusammenhang jegliches Material bzw. jegliche Materialzusammensetzung verstanden werden, welche piezoelektrische Eigenschaften hat. Somit handelt es sich um einen Sensor, der aufgrund von mechanischer Deformation ein elektrisches Signal erzeugen kann.

Unter einer optoelektrisch aktiven Komponente soll in diesem Zusammenhang jegliches Material bzw. jegliche Materialzusammensetzung verstanden werden, bei dem bzw. bei der aus Licht ein elektrisches Signal erzeugt wird oder umgekehrt. Somit handelt es sich um einen Sensor, der aufgrund von Lichteinwirkung ein elektrisches Signal erzeugen kann.

Selbstverständlich ist es auch möglich, dass der Sensor sowohl mechanische Deformation als auch Lichteinwirkung detektieren kann.

Eine weitere bevorzugte Ausführungsform der Erfindung sieht vor, dass der dritte Werkstoff eine piezoelektrisch aktive Komponente umfasst. Somit handelt es sich um einen Aktuator, der sich aufgrund eines elektrischen Signals mechanisch deformiert.

Nach einer weiteren besonders bevorzugten Ausführungsform der Erfindung umfasst der zweite und / oder der dritte Werkstoff eine Piezokeramik. Hierbei handelt es sich bei der Piezokeramik vorzugsweise um eine Blei-Zirkon-Titan-Oxid-Verbindung bzw. Blei-Zirkonat-Titanat-Verbindung. Des weiteren ist es möglich, dass die Piezokeramik eine Blei-Zirkon-Titan-Oxid-Verbindung bzw. Blei-Zirkonat-Titanat-Verbindung eine enthält.

Weitere bevorzugte Ausführungsformen der Erfindung sehen vor, dass der zweite und / oder der dritte Werkstoff faserförmig ausgebildet ist. Faserförmig soll in diesem Zusammenhang bedeuten, dass der zweite und / oder der dritte Werkstoff als Faserwerkstoff oder als Faserverbundwerkstoff ausgebildet ist. Handelt es sich um die oben beschriebene Blei-Zirkon-Titan-Oxidkeramik bzw. Blei-Zirkonat-Titanat-Keramik in Faserform, so spricht man von PZT Fasern. Unter einem Faserverbundwerkstoff sind in diesem Zusammenhang, bspw. PZT Fasern zu verstehen, die in eine Epoxidharzmatrix eingelegt sind und optional mit weiteren Fasern verstärkt sind.

Nach einer weiteren besonders bevorzugten Ausführungsform ist der zweite und / oder dritte Werkstoff zumindest abschnittweise als Flachmaterial ausgebildet. Als Flachmaterial kann bspw. eine plattenförmige Piezokeramik angesehen werden.

Es sind unterschiedliche Möglichkeiten denkbar, den Verbund zwischen dem ersten, dem zweiten und dem dritten Werkstoff herzustellen. Eine bevorzugte Ausführungsform sieht vor, dass der erste und / oder der zweite und / oder der dritte Werkstoff zumindest abschnittweise miteinander verklebt und / oder laminiert und / oder pultrudiert und / oder verpresst und / oder verschweißt und / oder verlötet und / oder vernietet sind. Werden der erste Werkstoff und / oder der zweite Werkstoff und / oder der dritte Werkstoff miteinander laminiert, so kann dies bspw. durch Handlaminieren, Faserspritzen oder ein Wickelverfahren erfolgen.

Gemäß einer weiteren besonders bevorzugten Ausführungsfrom der Erfindung ist vorgesehen, dass der zweite und /oder dritte Werkstoff in den ersten Werkstoff zumindest abschnittweise eingebettet ist und / oder zumindest abschnittweise mit dem ersten Werkstoff flächig verbunden ist.

In den Bereich dieses Ausführungsbeispiels fällt bspw. aber nicht ausschließlich ein faserförmig bzw. plattenförmig ausgebildete r Abschnitt des zweiten und / oder dritten Werkstoffs, der zumindest teilweise in den ersten Werkstoff eingebettet ist.

Es ist aber auch denkbar, dass das faserförmig oder plattenförmig ausgebildete zweite und / oder dritte Werkstoff im wesentlichen auf seiner gesamten Länge auf einer Seite oder auf zwei gegenüberliegenden Seiten mit dem ersten Werkstoff verbunden ist, um eine Art "Sandwich" zu bilden.

Nach einem weiteren bevorzugten Ausführungsbeispiel weist der Sensor zumindest ein Sensorelement bzw. zumindest ein Aktuatorelement auf. Durch die Einführung der Begriffe Sensorelement bzw. Akt uatorelement sollen hierbei unabhängig voneinander arbeitende Funktionseinheiten definiert werden.

So ist es bspw. möglich, dass im Grundkörper des Querelements an unterschiedlichen Stellen ein dritter Werkstoff lokalisiert ist. Die unterschiedlichen Stellen im Grundkörper mit aktorischen Eigenschaften können hierbei zusammengefasst ein Aktuatorelement bilden, welches als Einheit immer zusammen angesteuert wird.

Es ist aber auch möglich, dass jede Stelle des dritten Werkstoffs im Grundkörper für sich ein eigenes Aktuatorelement bildet, wobei jede Stelle für sich separat ansteuerbar ist. Selbstverständlich ist das o.g. Bsp. auch für unterschiedliche Stellen des zweiten Werkstoffs im Grundkörper gültig.

Des weiteren ist es möglich , das s ein Sensorelement nacheinander unterschiedliche Arten von Betriebszuständen wie bspw. Durchbiegung, Druck, Schwingungsfrequenz und / oder -amplitude usw. detektiert. Es ist aber auch möglich, dass ein Sensorelement eine Art von Betriebszustand in zeiticher Abfolge detektiert.

Nach einer bevorzugten Ausführungsform der Erfindung weist der Sensor mehrere Sensorelemente auf, die unabhängig voneinander arbeiten.

Des weiteren sieht eine bevorzugte Ausführungsform vor, dass die Sensorelemente an unterschiedlen Stellen des Grundkörpers angeordnet sind.

So ist es bspw. denkbar, dass mehrere Sensorelemente entlang der Längsachse und / oder entlang der Querachse des Grundkörpers angeordnet sind und zu einem bestimmten Zeitpunkt die gleiche Art von Betriebszuständen wie bspw. Schwingungsamplituden detektieren, wodurch eine ortsaufgelöste Detektion dieses Betriebszustands ermöglicht wird. Es ist aber auch möglich, dass zu einem bestimmten Zeitpunkt unterschiedliche Betriebszustände an unterschiedlichen Orten des Grundkörpers detektiert werden.

Nach einer bevorzugten Ausführungsform der Erfindung weist der Aktuator mehrere Aktuatorelemente auf, die unabhängig voneinander arbeiten.

Eine weitere Ausführungsform sieht vor, dass die Aktuatorelemente an unterschiedlen Stellen des Grundkörpers angeordnet sind.

Durch mehrere bspw. in Längs- und / oder Querrichtung des Grundkörpers angeordnete und voneinander unabhängig ansteuerbare Aktuatorelemente ist es bspw. möglich , im Grundkörper ortsaufgelöst unterschiedliche Eigenschaften einzustellen und / oder ortsaufgelöst eine bestimmte Eigenschaft unterschiedlich stark einzustellen. Beispielhaft ist denkbar, das Dämpfungsverhalten des Grundkörpers enlang der Längsachse abhängig vom gemessenen Sensorsignal ortsaufgelöst unterschiedlich stark einzustellen.

Ein weiteres besonders bevorzugtes Ausführungsbeispiel der Erfindung sieht vor, dass zumindest ein Element als Aktuatorelement und als Sensorelement arbeitet. So ist es bspw. möglich, dass ein piezoelektrischer Sensor, der bspw. Drucksignale oder Schwingungen detektiert ebenfalls als piezoelektrischer Aktuator arbeitet, welcher durch mechanische Deformation ein elektrisches Signal erzeugt, bzw. welcher durch ein elektrisches Signal eine Veränderung des E-Modus des Grundkörpers hervorruft und somit eine Änderung der Eigenschaften des Grundkörpers bewirkt, wie bspw. eine Änderung des Dämpfungsverhaltens, der Durchbiegung oder der Steifigkeit.

Bei piezoelektrischen Fasern ist die Deformationsrichtung immer entlang der Faserrichtung gegeben, d.h. es liegt ein anisotroper Piezoeffekt vor. Bei Anlegen eines elektrischen Signals bspw. einer elektrischen Spannung an die Piezofasern findet dementsprechend eine Verlängerung bzw. Verkürzung der Piezofasern in Faserrichtung statt. Des weiteren wird bei mechanischer Deformation entlang der Faserrichtung ein elektrisches Signal bspw. eine Spannung erzeugt.

Um die mechanischen und geometrischen Betriebszustände eines Grundkörpers mit anisotropen piezoelektrischen Sensoren in mehreren Raumrichtungen detektieren zu können, und um die mechanischen und geometrischen Eigenschaften eines Grundkörpers mit anisotropen piezoelektrischen Aktoren in mehreren Raumrichtungen beeinflussen zu können, ist es demzufolge sinnvoll, wenn sich die Deformationsrichtungen (bspw. Piezofasern) nicht alle parallel zueinander erstrecken. Nach einer bevorzugten Ausführungsform ist deshalb vorgesehen, dass sich die Deformationsrichtung zumindest eines Sensorelements bzw. zumindest eines Aktuatorelements im Grundkörper zumindest abschnittweise nicht parallel zur Deformationsrichtung der anderen Sensorelemente bzw. Aktuatorelemente erstreckt.

An dieser Stelle sein noch anzumerken, dass sich Senor- und / oder Aktuatorelemente in allen drei Raumrichtungen erstrecken können.

Um die mechanischen und geometrischen Betriebszustände eines Grundkörpers mit anisotropen piezoelektrischen Sensoren entlang dessen Längsachse sowie in der Ebene senkrecht zur Längsachse detektieren zu können, ist es sinnvoll, wenn sich die Deformationsrichtung zumindest eines Sensorelements in Längsrichtung des Grundkörpers, und wenn sich die Deformationsrichtung zumindest eines anderen Sensorelements quer zur Längsrichtung des Grundkörpers erstreckt.

Um die mechanischen und geometrischen Eigenschaften eines Grundkörpers mit anisotropen piezoelektrischen Aktoren entlang der Längsachse des Grundkörpers sowie in der Ebene senkrecht zur Längsachse des Grundkörpers beeinflussen zu können, ist es des weiteren sinnvoll, wenn sich die Deformationsrichtung zumindest eines Aktuatorelements in Längsrichtung des Grundkörpers und wenn sich die Deformationsrichtung zumindest eines anderen Aktuatorelements quer zur Längsrichtung des Grundkörpers erstreckt. Je nach Anwendung kann eine Positionierung der Aktuatoren in allen Raumrichtungen sinnvoll sein.

Nach einem besonders bevorzugten Ausführungsbeispiel der Erfindung sind der Sensor und der Aktuator mit einer Regelungseinheit verbunden, wobei Sensorsignale vom Sensor an die Regelungseinheit übermittelt werden, und wobei der Aktuator Veränderungen der Eigenschaften des Grundkörpers auf Basis von Regelsignalen der Regelungseinheit vornimmt.

Der Regelmechanismus soll beispielhaft erläutert werden:

Durch den Sensor werden bspw. Schwingungen, die an Papiermaschinen stets vorhanden sind, detektiert und die gemessenen Werte als Sensorsignale und an die Regelungseinheit übermittelt. Bspw. bei Überschreiten der Schwingungsamplituden über einen zulässigen Grenzwert, gibt die Regelungseinheit an die Aktuatoren Regelsignale aus, welche die Aktuatoren veranlassen, bspw. durch mechanische Deformation verschiedener Aktuatorelemente die Dämpfungseigenschaften des Grundkörpers so lange zu verändern, bis die detektierten Schwingungsamplituden unter dem zulässigen Grenzwert liegen.

Somit ist es durch die mit dem Sensor und dem Aktuator verbundene Regelungseinheit möglich, mechanische und geometrische Eigenschaften des Grundkörpers adapitv auf Basis der von Sensor detektierten Betriebszustände einzustellen.

Selbstverständlich ist die Adaption der Eigenschaften des Grundkörpers nicht allein auf die Auswertung der Sensorsignale durch die Regelungseinheit beschränkt. So ist es durchaus möglich, dass zur Regelung des Aktuators von der Regelungseinheit auch Steuersignale einer Steuereinheit der bahnverarbeitenden Maschine berücksichtigt werden. Die Steuersignale können hierbei von der Steuereinheit auf Basis der Verarbeitung von Prozeßdaten, wie Geschwindigkeit, Stoffzusammensetzung, Maschinenkonfiguration und dgl. erzeugt werden. Darüber hinaus ist es auch denkbar, dass der Regelungseinheit direkt Prozeßdaten zugeführt werden, und dass die Regelungseinheit darauf basierend, entsprechende Regelsignale an den Aktuator ausgibt.

Nachfolgend wird die Erfindung anhand von schematischen Zeichnungen auf der Grundlage vom beispielhaft bevorzugten Ausführungsbeispielen weiter veranschaulicht. Es zeigen:
- Figur 1: ein als Schaberbalken ausgebildetes erfindungsgemäßes Querelement in perspektivischer Darstellung,
- Figur 2: einen erfindungsgemäßen Schaberhalter mit erfindungsgemäßer Schaberklinge in Seitenansicht,
- Figur 3: eine Blockschaltbild einer erfindungsgemäßen Regelungseinheit mit Sensor und Aktuator.

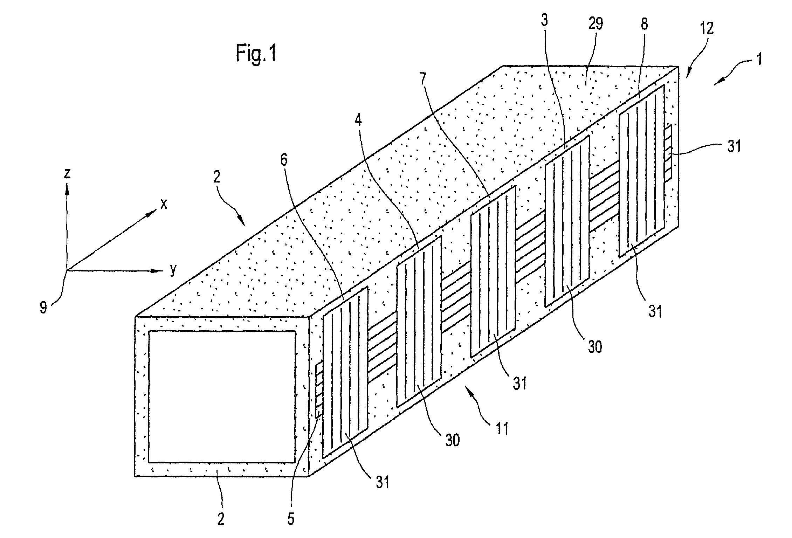

Die Figur 1 zeigt einen Grundkörper 2 eines Schaberbalken 1 in perspektivischer Darstellung. Der Grundkörper 2 ist als balkenförmiges Hohlprofil mit einer Wandstärke von bis zu 10mm ausgeführt. Bei besonderen Anwendungen ist es auch möglich, dass die Wandstärke größer oder kleiner 10mm ist, bspw. bei Verbunden mit Schaum- und / oder Wabenkem.

Nachfolgend sollen exemplarisch Sensoren 11 und Aktoren 12 des Grundkörpers 2 im Bereich einer Vorderwand 10 des Grundkörpers 2 beschrieben werden. Dies bedeutet, dass der Grundkörper 2 auch Sensoren und / oder Aktuatoren im Bereich seiner Hinterwand, sowie seiner Ober- bzw. Unterwand aufweisen kann.

Der Grundkörper 2 ist aus einem ersten Werkstoff 29, einem zweiten Werkstoff 30 und einem dritten Werkstoff 31 aufgebaut. Der erste Werkstoff 29 (gepunktet gezeichnet) bildet die Stützstruktur des Grundkörpers 2 und ist ein Faserverbundwerkstoff. Der den ersten Werkstoff 29 bildende Faserverbundwerkstoff besteht hierbei aus einer duroplastischen Matrix bspw. Epoxidharz, Cyanatesterharz oder Phenol-Formaldehyd Harz oder aus einer thermoplastischen Matrix bspw. Polyphenylensulfid, Polyetheretherketon oder einer Kombination dieser Materialien sowie aus einer Verstärkung mit Glas-, Carbon- oder Kevlarfasern.

Die Figur 1 zeigt die Vorderwand 10 des Grundkörpers 2 mit teilweise abgetragenem ersten Werkstoff 29, so dass der vollständig in den ersten Werkstoff 29 eingebettete zweite Werkstoff 30 und der vollständig in den ersten Werkstoff 29 eingebettete dritte Werkstoff 31 sichtbar sind.

Der zweite Werkstoff 30 bildet den integralen Sensor 11 des Grundkörpers 2 und der dritte Werkstoff 31 bildet den integralen Aktuator 12 des Grundkörpers 2. Der zweite 30 und der dritte Werkstoff 31 sind ein piezoelektrischer Faserverbundwerkstoff, bestehend aus PZT-Fasern, die in eine Epoxy- oder andere Matrix eingelegt und mit weiteren Fasern verstärkt sind. Im vorliegenden Beispiel handelt es sich beim zweiten 30 und dritten Werkstoff 31 um das gleiche Material.

Der zweite Werkstoff 30 und der dritte Werkstoff 31 sind bahnförmig ausgebildet und mit dem ersten Werkstoff 29 durch Verpressung zu einem Verbund unter Temperatur und Druck zu einem Bauteil, dem Grundkörper 2, vereint.

Wie aus der Figur 1 zu erkennen ist, sind der zweite Werkstoff 30 und der dritte Werkstoff 31 nur an einigen Stellen in den ersten Werkstoff 29 eingebettet. So weist der zweite Werkstoff einen bahnförmigen Abschnitt 3 und einen bahnförmigen Abschnitt 4 auf, der in den ersten Werkstoff 29 eingebettet ist. Der dritte Werkstoff 31 weist die Abschnitte 5 bis 8 auf, die in den ersten Werkstoff 29 eingebettet sind.

Die Abschnitte 6,7,8 erstrecken sich quer zur Längsrichtung 9 des Grundkörpers 2. Der Abschnitt 5 erstreckt sich in Längsrichtung 9 des Grundkörpers 2.

Die Abschnitte 3 und 4 erstrecken sich jeweils quer zur Längsrichtung 9 des Grundkörpers 2.

Der sich in Längsrichtung 9 erstreckende Abschnitt 5 des dritten Werkstoffs 31 verläuft als Bahn unter den quer zur Längsrichtung verlaufenden Bahnen 3,4,6,7,8 des zweiten Werkstoffs 30 und des dritten Werkstoffs 31.

Die PZT-Fasern sind in der Darstellung der Figur 1 als Striche im Bereich der Abschnitte 3,4,5,6,7,8 des zweiten 30 und des dritten Werkstoffs 31 zu erkennen.

Die Abschnitte 3 und 4 des zweiten Werkstoffs bilden zwei voneinander unabhängig arbeitende Sensorelemente 3 und 4 des Sensors 11. Die Fasern der Sensorelemente 3 und 4 erstrecken sich senkrecht zur Längsrichtung 9 des Grundkörpers 2. Somit können durch die Sensorelemente 3 und 4 an unterschiedlichen Stellen Stellen des Grundkörpers 2 Deformationen detektiert werden. Mit dem Sensor 11 sind somit bspw. Schwingungen und Durchbiegungen des Grundkörpers 2 detektierbar. Hier bei wird durch Deformation der Sensorelemente 3 und 4 eine Spannung erzeugt. Es versteht sich, dass die Sensoren und Aktuatoren auch genau umgekehrt und / oder in anderen technisch sinnvollen Positionen positioniert werden können.

Die Abschnitte 5,6,7,8 bilden vier voneinander unabhängig arbeitende Aktuatorelemente 5,6,7,8 des Aktuators 12. Die Fasern des Aktuatorelement s 5 erstrecken sich im wesentlichen über dessen gesamte Länge parallel zur Längsachse 9 des Grundkörpers 2. Die Fasern der Aktuatorelement e 6 bis 8 erstrecken sich jeweils senkrecht zur Längsrichtung 9 des Grundkörper 2. Hierbei sind die Aktuatorelemente 6 bis 8 mittig, links- und rechtsseitig im Bereich der Vorderwand 10 vorgesehen, wobei zwischen den Aktuatorelementen 6 bis 8 eines der Sensorelemente 3 oder 4 angeordnet ist. Mit dem Aktuator 12 ist somit durch Deformation der Aktuatorelemente 5 bis 8 die Form, die Durchbiegung, die Steifigkeit und die Dämpfung des Grundkörpers 2 ortsabhängig einstellbar. Hierzu muss an die Aktuatorelemente 5 bis 8 jeweils eine entsprechende Spannung angelegt werden. Selbstverständlich ist es denkbar, dass das Aktuatorelement 5 auch in einzelne Subelemente aufgetrennt werden kann.

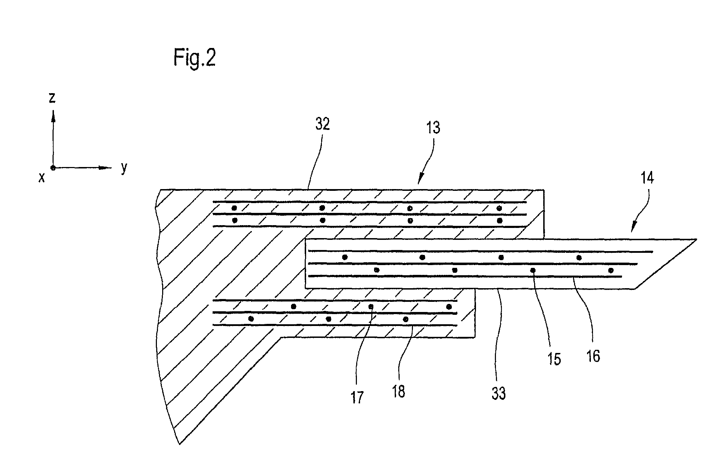

Die Figur 2 zeigt in Seitenansicht einen Ausschnitt des Grundkörpers 32 eines erfindungsgemäßen als Schaberhalter 13 ausgebildeten Querelements und einen Ausschnitt des Grundkörpers 33 eines erfindungsgemäßen als Schaberklinge 14 ausgebildeten Querelements . Der Grundkörper 32 des Schaberhalter s 13 und der Grundkörper 33 der Schabe rklinge 14 sind im vorliegenden Ausführungsbeispiel aus einem Faserverbundwerkstoff gefertigt, in den Piezoverbundwerkstoffe mit Piezofasern 17, 18 bzw. 15, 16 eingebettet sind. Nicht gezeigt sind Piezofasern in der dritten Raumrichtung, da Dehnung bzw. Kontraktion normal zur Längsachse 9 nur geringe Änderungen bewirken können.

Die Schaberklinge 14 weist die Piezofasern 15 und 16 auf, die quer bzw. parllel zur Längsachse der Schaberklinge 14 verlaufen. Der Schaberklingenhalter 13 weist die Piezofasern 17 und 18, die quer bzw. parallel zur Längsachse des Schaberklingenhalters 13 verlaufen. Im vorliegenden Ausführungsbeispiel bilden die Piezofasern 15 und 16 sowohl einen Sensor wie auch einen Aktuator. Darüber hinaus bilden die Piezofasern 17 und 18 sowohl einen Sensor wie auch einen Aktuator. Wie in Figur 1 sind auch in diesem Ausführungsbeispiel der Sensor und der Aktuator zu einem Verbund mit dem die Stützstruktur bildenden ersten Werkstoff des Grundkörpers 32 des Schaberhalters 13 bzw. des Grundkörpers 33 der Schaberklinge 14 vereint.

Der Schaberhalter 13 kann somit in seiner Steifigkeit und seinem Dämpfungsverhalten adaptiv gesteuert werden. Somit kann bspw. während des Betriebs der bahnverarbeitenden Maschine der Schaberwinkel einer geänderten Maschinenkonfiguration angepasst werden, indem der Grundkörper 32 des Schaberhalters 13 aufgrund der Aktuatorwirkung seine Form und Gestalt ändert.

Des weiteren ist aufgrund der Aktuatorwirkung bspw. die Härte und Steifigkeit der Schaberklinge 14 in deren Längs- und Querrichtung adaptiv veränderbar.

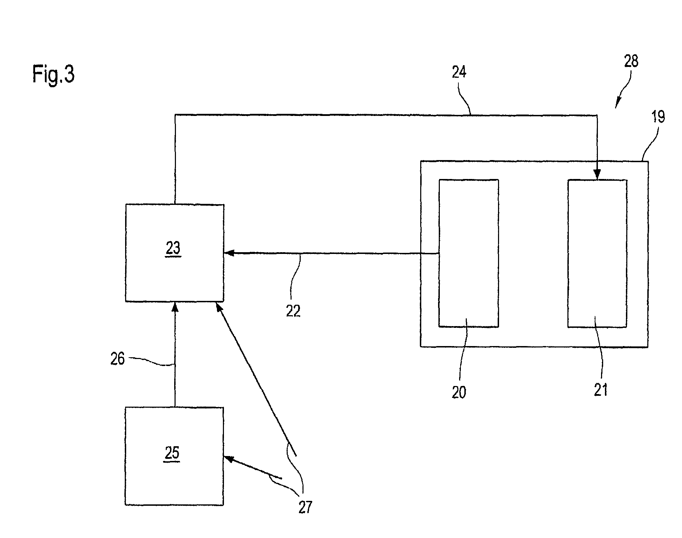

Die Figur 3 zeigt ein Blockschaltbild eines erfindungsgemäßen Querelements 28 mit Regelungseinheit 23.

Der Sensor 20 des Grundkörpers 19 detektiert Betriebzustände, wie bspw.Schwingungsamplitude, Schwingungsfrequenz oder Durchbiegung des Grundkörpers 19 und gibt entsprechende Sensorsignale 22 an die Regelungseinheit 23 aus.

Die Regelungseinheit 23 kann des weiteren Steuersignale 26 einer Steuereinheit 25 empfangen, welche von der Steuereinheit 25 bspw. aufgrund von Maschinenparametem und Prozeßdaten bzw. Prozeßparametern 27 generiert werden.

Des weiteren kann die Regelungseinheit 23 Maschinenparameter, Prozeßdaten bzw. Prozeßparameter 27 empfangen, welche ohne vorherige Verarbeitung durch eine Steuereinheit direkt an die Regelungseinheit 23 übermittelt werden.

Die Regelungseinheit 23 verarbeitet die empfangenen Sensorsignale 22 und / oder die empfangenen Steuersignale 26 und / oder die empfangenen Maschinenparameter, Prozeßdaten bzw. Prozeßparameter 27 und generiert auf deren Basis ein Regelsignal 24.

Hierbei ist es möglich, dass die Regelungseinheit 23 ein Regelsignal 24 nur auf Basis von empfangenen Steuersignalen 26 und / oder Maschinenparametern, Prozeßdaten bzw. parametern 27 erzeugt, um bspw. das Querelement 28 auf einer geänderte Maschinenkonfiguration einzustellen.

Es ist aber auch möglich, dass Regelungseinheit 23 nur Sensorsignale 22 oder Sensorsignale 22 und / oder Steuersignale 26 und / oder Maschinenparameter, Prozeßdaten- bzw. parameter 27 verarbeitet. Verarbeitet die Regelungseinheit 23 bspw. Sensorsignale 22, so gibt diese, je nach Softwarekonfiguration ständig oder nur bei Über- bzw. Unterschreiten eines gewissen Grenzwerts Regelungssignale 24 des Sensorsignals 22 an den Aktuator 21 des Grundkörpers 19 des Querelements 28 aus. Der Aktuator 21 ändert daraufhin Eigenschaften wie Steifigkeit und / oder Dämpfungsverhalten und dgl. bis der vom Sensor 20 gemessene Betriebszustand wieder innerhalb des Sollbereichs liegt, oder einen Sollwert erreicht hat.

## Patentansprüche

1. Querelement (1,13,14,28) für eine bahnverarbeitende Maschine, mit einem balken- oder walzenförmigen Grundkörper (2,19,32,33) der sich zumindest abschnittweise quer zur Längsrichtung (9) der bahnverarbeitenden Maschine erstreckt und mittelbar oder unmittelbar mit einer äußeren oder inneren Mantelfläche einer Walze der bahnverarbeitenden Maschine in Kontakt bringbar ist,
**dadurch gekennzeichnet,**
**dass** ein Sensor (11,20) und ein Akuator (12,21) integraler Bestandteil des Grundkörpers (2,13,14,19) sind, wobei durch den Sensor (11,20) Betriebszustände des Grundkörpers (2,13,14,19) ermittelbar sind, und wobei durch den Aktuator (12,21) Eigenschaften des Grundkörpers (2,13,14,19) einstellbar sind.

2. Querelement nach Anspruch 1,
**dadurch gekennzeichnet,**
**dass** der Grundkörper (2,19,32,33) im wesentlichen aus einem ersten Werkstoff (29), einem zweiten Werkstoff (30) und einem dritten Werkstoff (31) aufgebaut ist, die miteinander einen Verbund bilden, wobei die Grundstruktur des Grundkörpers (2,19,32,33) durch den ersten Werkstoff (29), der Sensor durch den zweiten Werkstoff (30) und der Aktuator durch den dritten Werkstoff (31) gebildet wird.

3. Querelement nach einem der Ansprüche 1 bis 2,
**dadurch gekennzeichnet,**
**dass** der erste Werkstoff (29) ein Faserverbund ist.

4. Querelement nach einem der Ansprüche 1 bis 2,
**dadurch gekennzeichnet,**
**dass** der erste Werkstoff (29) ein Hybridverbund aus einem Faserverbund und Metall ist.

5. Querelement nach einem der Ansprüche 1 bis 2,
**dadurch gekennzeichnet,**
**dass** der erste Werkstoff (29) einen metallischer und / oder ein thermoplastischer Werkstoff umfasst.

6. Querelement nach einem der Ansprüche 1 bis 5,
**dadurch gekennzeichnet,**
**dass** der zweite Werkstoff (30) eine piezoelektrisch und / oder optoelektrisch aktive Komponente umfasst.

7. Querelement nach einem der Ansprüche 1 oder 6,
**dadurch gekennzeichnet,**
**dass** der dritte Werkstoff (31) eine piezoelektrisch aktive Komponente umfasst.

8. Querelement nach einem der Ansprüche 1 bis 7,
**dadurch gekennzeichnet,**
**dass** der zweite (30) und / oder der dritte Werkstoff (31) eine Piezokeramik umfasst.

9. Querelement nach Anspruch 8,
**dadurch gekennzeichnet,**
**dass** die Piezokeramik eine Blei-Zirkon-Titan-Oxid-Verbindung bzw. eine Blei-Zirkonat-Titanat-Verbindung ist oder eine Blei-Zirkon-Titan-Oxid-Verbindung bzw. eine Blei-Zirkonat-Titanat-Verbindung enthält.

10. Querelement nach einem der Ansprüche 1 bis 9,
**dadurch gekennzeichnet,**
**dass** der zweite (30) und / oder der dritte Werkstoff (31) faserförmig ausgebildet ist.

11. Querelement nach Anspruch 10,
**dadurch gekennzeichnet,**
**dass** der zweite (30) und / oder der dritte Werkstoff (31) ein Faserverbund ist.

12. Querelement nach einem der Ansprüche 1 bis 11,
**dadurch gekennzeichnet,**
**dass** der zweite (30) und / oder der dritte Werkstoff (31) als Flachmaterial ausgebildet ist.

13. Querelement nach einem der Ansprüche 1 bis 12,
**dadurch gekennzeichnet,**
**dass** der erste (29), der zweite (30) und der dritte Werkstoff (31) zumindest abschnittweise miteinander verklebt und / oder laminiert und / oder verpresst und / oder verschweißt und / oder verlötet und / oder vernietet sind.

14. Querelement nach einem der Ansprüche 1 bis 13,
**dadurch gekennzeichnet,**
**dass** der zweite (30) und /oder dritte Werkstoff (31) in den ersten Werkstoff (29) zumindest abschnittweise eingebettet ist und / oder zumindest abschnittweise mit dem ersten Werkstoff (29) flächig verbunden ist.

15. Querelement nach einem der Ansprüche 1 bis 14,
**dadurch gekennzeichnet,**
**dass** der Sensor (11,20) bzw. Aktuator (12,21) durch zumindest ein Sensorelement (3,4,15,16,17,18) bzw. Aktuatorelement (5,6,7,8,15,16,17,18) gebildet wird.

16. Querelement nach Anspruch 15,
**dadurch gekennzeichnet,**
**dass** der Sensor (11,20) bzw. Aktuator (12,21) durch mehrere Sensorelemente (3,4,15,16,17,18) bzw. Aktuatorelemente (5,6,7,8,15,16,17,18) gebildet wird, von denen zumindest zwei voneinander unabhängig arbeiten.

17. Querelement nach einem der Ansprüche 15 bis 16,
**dadurch gekennzeichnet,**
**dass** die Sensorelemente (3,4,15,16,17,18) an unterschiedlen Stellen des Grundkörpers (2,19,32,33) angeordnet sind.

18. Querelement nach einem der Ansprüche 15 und 17,
**dadurch gekennzeichnet,**
**dass** die Aktuatorelemente (5,6,7,8,15,16,17,18) an unterschiedlen Stellen des Grundkörpers (2,19,32,33) angeordnet sind.

19. Querelement nach einem der Ansprüche 15 bis 18,
**dadurch gekennzeichnet,**
**dass** zumindest eine Element (15,16,17,18) sowohl ein Aktuatorelement als auch ein Sensorelement ist.

20. Querelement nach einem der Ansprüche 15 bis 19,
**dadurch gekennzeichnet,**
**dass** sich die Deformationsrichtung zumindest eines Sensorelements (3,4,15,16,17,18) bzw. Aktuatorelements (5,6,7,8,15,16,17,18) im Grundkörper (2,19,32,33) zumindest abschnittweise nicht parallel zur Deformationsrichtung der anderen Sensorelemente (3,4,15,16,17,18) bzw. Aktuatorelemente erstreckt (5,6,7,8,15,16,17,18).

21. Querelement nach Anspruch 20,
**dadurch gekennzeichnet,**
**dass** sich die Deformationsrichtung zumindest eines Sensorelements (3,4,15,16,17,18) bzw. Aktuatorelements (5,6,7,8,15,16,17,18,19) in Längsrichtung (9) erstreckt, und dass sich die Deformationsrichtung zumindest eines anderen Sensorelements (3,4,15,16,17,18) bzw. Aktuatorelements (5,6,7,8,15,16,17,18) quer zur Längsrichtung (9) des Grundkörpers (2,19,32,33) erstreckt.

22. Querelement nach Anspruch 21,
**dadurch gekennzeichnet,**
**dass** sich die Fasern des Sensorelements (3,4,15,16,17,18) Aktuatorelements (5,6,7,8,15,16,17,18) zumindest abschnittweise in Längsrichtung (9) und / oder in Umfangrichtung und / oder in Querrichtung des Grundkörpers (2,19,32,33) erstrecken.

23. Querelement nach einem der Ansprüche 1 bis 22,
**dadurch gekennzeichnet,**
**dass** der Sensor (11,20) und der Aktuator (12,21) mit einer Regelungseinheit (23) verbunden sind, wobei Sensorsignale (22) vom Sensor (11,20) an die Regelungseinheit (23) übermittelt werden, und wobei der Aktuator (11,20) Änderungen der Eigenschaften des Grundkörpers (2,19,32,33) auf Basis von Regelsignalen (24) der Regelungseinheit (23) vornimmt.

24. Querelement nach Anspruch 23,
**dadurch gekennzeichnet,**
**dass** von der Regelungseinheit (23) Regelsignale (24) auf Basis der Verarbeitung der Sensorsignale (22) und / oder auf Basis von Steuersignalen (26) einer Steuereinheit (25) der Maschine und / oder auf Basis der Verarbeitung von Prozeßdaten (27) der Maschine ausgegeben werden.

25. Querelement nach einem der Ansprüche 1 bis 24,
**dadurch gekennzeichnet,**
**dass** das Querelement ein Schaberbalken (1) oder ein Schaberhalter (13) oder eine Schaberklinge (14)einer Schabereinrichtung ist.

26. Querelement nach Anspruch 25,
**dadurch gekennzeichnet,**
**dass** die Sensoren (11,20) und / oder Aktuatoren (12,21) des Schaberbalkens (1) und / oder des Schaberhalters (13) und / oder der Schaberklinge (14) über die Regelungseinheit (23) miteinander verbunden sind.

27. Querelement nach einem der Ansprüche 1 bis 26,
**dadurch gekennzeichnet,**
**dass** das Querelement ein Rakelbalken einer Rakeleinrichtung ist.

28. Querelement nach einem der Ansprüche 1 bis 27,
**dadurch gekennzeichnet,**
**dass** das Querelement ein Luftabquetschbalken oder eine Luftabquetschwalze eines Luftabquetschelements ist.

29. Querelement nach einem der Ansprüche 1 bis 28,
**dadurch gekennzeichnet,**
**dass** das Querelement eine Dichtleiste eines Dichtelements für Saugwalzen ist.
